# EUROPÄISCHE PATENTSCHRIFT

(11) **EP 3 465 800 B1**
(45) Veröffentlichungstag und Bekanntmachung des Hinweises auf die Patenterteilung: **25.02.2026**
(21) Anmeldenummer: 17729370.1
(22) Anmeldetag: 15.05.2017
(51) Int. Cl.: B23K 101/38, H01M 50/581, B23K 1/00

(54) **ELEKTRISCHE ÜBERBRÜCKUNGSEINRICHTUNG ZUM ÜBERBRÜCKEN EINER ELEKTRISCHEN ENERGIEQUELLE ODER EINES ENERGIEVERBRAUCHERS**
ELECTRICAL BYPASS DEVICE FOR BYPASSING AN ELECTRICAL ENERGY SOURCE OR AN ENERGY CONSUMER
DISPOSITIF DE PONTAGE ÉLECTRIQUE POUR LE PONTAGE D'UNE SOURCE D'ÉNERGIE ÉLECTRIQUE OU D'UN CONSOMMATEUR D'ÉNERGIE

(30) Priorität: 17.05.2016 DE 102016208419
(43) Veröffentlichungstag der Anmeldung: 10.04.2019
(73) Patentinhaber: Fraunhofer-Gesellschaft zur Förderung der angewandten Forschung e.V., 80686 München (DE)
(72) Erfinder: WALLER, Reinhold, 91077 Neunkirchen/Br. (DE); LORENTZ, Vincent, 91056 Erlangen (DE); MÄRZ, Martin, 90491 Nürnberg (DE)
(74) Vertreter: Gagel, Roland
(86) Internationale Anmeldenummer: PCT/EP2017/061581
(87) Internationale Veröffentlichungsnummer: WO 2017/198599

(56) Entgegenhaltungen:
- EP-A2- 2 642 582
- DE-A1- 102010 051 669
- US-A1- 2013 115 511

## Beschreibung

### Technisches Anwendungsgebiet

Die vorliegende Erfindung betrifft eine elektrische Überbrückungseinrichtung aus wenigstens zwei voneinander elektrisch isolierten elektrischen Leitern, die durch Auslösen einer exothermen Reaktion in einer über den Leitern angeordneten reaktiven Schicht elektrisch miteinander verbindbar sind.

Eine derartige elektrische Überbrückungseinrichtung dient insbesondere dem Überbrücken einer Energiequelle oder eines Energieverbrauchers. Solche Energiequellen oder Energieverbraucher finden sich in einer Vielzahl von Geräten, bspw. in elektrischen Fahrzeugen oder stationären Energiespeichern. Die elektrische Energie kann dabei in chemischer Form wie im Falle von Batteriezellen oder auch in physikalischer Form z.B. in Kondensatorzellen gespeichert werden. Zur Erzeugung ausreichender Spannungen und hoher Ströme von 100 bis 1000 A, wie sie bspw. für Kraftfahrzeuge mit elektrischen Antrieben erforderlich sind, werden mehrere dieser Zellen, bspw. zwischen 4 und mehr als 100 Zellen, in Serie zu einem Stapel von Zellen verbunden. Eine Herausforderung der in Serie bzw. in Reihe parallel verschalteten Zellen stellt die Zuverlässigkeit des gesamten Stapels und die Umorganisation des Stapels im Fall eines Zellenfehlers dar. Ohne weitere Maßnahmen fällt bei Ausfall einer Zelle in einem Stapel das gesamte System aus, obwohl der Stapel selbst immer noch eine ausreichende Anzahl von intakten Zellen umfasst. Bei Nutzung eines derartigen Systems in einem Elektrofahrzeug, aber auch im Fall der meisten Hybridfahrzeuge, kann ein Zellenfehler daher zu einem Systemausfall führen. Weiterhin kann eine degradierte Batteriezelle auch einen erhöhten Innenwiderstand aufweisen, der dann zu einer unzulässigen Erwärmung der Zelle führt. Grundsätzlich ist es daher wünschenswert, defekte Zellen während des Betriebs des Energiespeichers elektrisch überbrücken zu können, um derartige Probleme zu vermeiden.

### Stand der Technik

Zur Lösung der obigen Problematik sind sog. inverse Sicherungen (Antifuse) bekannt, die die entsprechende Zelle bzw. den entsprechenden Verbraucher bei einem Ausfall elektrisch überbrücken. Diese inversen Sicherungen werden vor allem bei Systemen niedriger Leistung eingesetzt, bspw. in integrierten Schaltungen und Beleuchtungssystemen. Bekannt sind bspw. Sicherungen, die eine dünne Barriere aus einem nicht-leitenden amorphen Silizium zwischen zwei Metallkontakten aufweisen. Wird eine ausreichend hohe Spannung über die beiden Anschlüsse an das amorphe Silizium angelegt, so geht dieses in eine leitfähige, polykristalline Silizium-Metall-Legierung mit niedrigem Widerstand über. Bei Beleuchtungssystemen wird mit einer derartigen inversen Sicherung vermieden, dass die gesamte Serienschaltung beim Ausfall einer einzelnen Leuchte ausfällt. Die Leuchten sind hierbei mit dieser Sicherung versehen. Bei einem Ausfall der Leuchte liegt die gesamte Netzspannung über die einzelne, ausgefallene Leuchte an. Damit wird die Sicherung wirksam und die ausgefalle Leuchte elektrisch überbrückt, so dass die Serienschaltung ihre Funktion weiter ausführen kann.

Weiterhin ist es bspw. im Bereich der Photovoltaik bekannt, Energiequellen bzw. Energieverbraucher durch Bypass-Dioden zu überbrücken. Die Bypass-Dioden dienen dazu, kurzfristige Unterbrechungen der Energieerzeugung durch eine Zelle zu handhaben, bspw. im Falle einer Abschattung einer Solargeneratorzelle. Bypass-Dioden stellen jedoch nur eine unidirektionale Verbindung her, so dass ein Energiespeicher mit Bypass-Dioden nur im Fall der Energieabgabe zuverlässig funktionieren würde. Ein Wiederaufladen der verbleibenden intakten Zellen wäre jedoch nicht möglich, da in der umgekehrten Richtung die Diode sperren würde. Daher stellen Bypass-Dioden, wie sie aus dem Bereich der Photovoltaik bekannt sind, für die eingangs genannten Anwendungen keine sinnvolle Maßnahme zur Überbrückung dar.

Aus der DE 37 21 754 A1 ist eine Überbrückungseinrichtung zur Sicherung von Batteriezellen bekannt, die eine irreversible Überbrückung von hochohmig ausfallenden, zerstörten Speicherzellen ermöglicht. Die Überbrückungseinrichtung besteht aus zwei schichtweise in Serie angeordneten Halbleiterbauelementen mit jeweils unterschiedlicher Strom/Spannungs-Charakteristik. Bei hochohmigem Ausfall einer zerstörten Speicherzelle fließt der hohe Ladestrom durch die beiden Halbleiterbauelemente, die aufgrund der daraus resultierenden starken Temperaturerhöhung durchlegieren und die Speicherzelle dadurch irreversibel niederohmig kurzschließen. Eine derartige passive Überbrückungseinrichtung wird allerdings nur ausgelöst, wenn die Akkumulatorzelle bereits stark degradiert ist. Ein vorzeitiges Auslösen, etwa zur Verhinderung hoher Verlustleistungen, ist nicht möglich.

Die bisher beschriebenen inversen Sicherungen sind für einen Einsatz in den eingangs genannten Anwendungen, bspw. bei Batterien zum Bereitstellen der Leistung für einen elektrischen Antrieb, nicht geeignet. Dies liegt vor allem an dem hohen Widerstand dieser Sicherungen im ausgelösten Zustand, der zu Verlustleistungen im Bereich von bis zu 50 W und damit zu einer unzulässigen Erwärmung der Sicherungen führt, an der geringen Stromtragfähigkeit dieser Sicherungen und auch an deren hohen Kosten.

Aus der DE 10 2012 005 979 A1 ist ein elektrisches Überbrückungselement für die Überbrückung von defekten Speicherzellen in Energiespeichern beschrieben, das sich prinzipiell auch für Batterien hoher elektrischer Leistung eignet. Bei diesem Überbrückungselement ist zwischen zwei elektrischen Leitern eine Schichtfolge mit wenigstens einer elektrischen Isolationsschicht und einem oder mehreren reaktiven Schichtstapeln ausgebildet, in denen sich eine exotherme Reaktion auslösen lässt. Die reaktiven Schichtstapel und die Isolationsschicht sind so aufeinander abgestimmt, dass sich die Isolationsschicht durch die bei der exothermen Reaktion abgegebene Wärmeenergie auflöst und eine elektrische Verbindung zwischen den elektrischen Leitern hergestellt wird. Rückstände aus dem Isolationsmaterial können dabei bei diesem Überbrückungselement jedoch Probleme bereiten.

Die Aufgabe der vorliegenden Erfindung besteht darin, eine elektrische Überbrückungseinrichtung, insbesondere zur Überbrückung elektrischer Energiequellen oder Energieverbraucher, anzugeben, die im ausgelösten Zustand hohe Ströme bei gleichzeitig niedrigem Serienwiderstand tragen kann, eine dauerhafte irreversible Überbrückung ermöglicht und sich kostengünstig herstellen lässt.

### Darstellung der Erfindung

Die Aufgabe wird mit der elektrischen Überbrückungseinrichtung gemäß Patentanspruch 1 gelöst. Vorteilhafte Ausgestaltungen der Überbrückungseinrichtung sind Gegenstand der abhängigen Patentansprüche oder lassen sich der nachfolgenden Beschreibung sowie den Ausführungsbeispielen entnehmen.

Die vorgeschlagene elektrische Überbrückungseinrichtung weist wenigstens zwei voneinander elektrisch isolierte elektrische Leiter auf, die beim Einsatz bspw. an die beiden Pole einer zu überbrückenden Energiequelle oder eines zu überbrückenden Energieverbrauchers angeschlossen werden. Die beiden elektrischen Leiter sind so angeordnet, dass wenigstens ein erster in eine Raumrichtung orientierter Oberflächenbereich des ersten Leiters über einen Spalt von wenigstens einem zweiten in die gleiche Raumrichtung orientierten Oberflächenbereich des zweiten Leiters beabstandet ist. Unter der Orientierung eines Oberflächenbereiches in eine Raumrichtung ist dabei zu verstehen, dass der Oberflächenbereich aus dieser Raumrichtung als Flächenbereich zu erkennen ist. Hiermit soll vor allem klargestellt werden, dass die beiden Oberflächenbereiche weder gegeneinander gerichtet sind, noch unter einem senkrechten Winkel zueinander stehen. Über den beiden Oberflächenbereichen ist ein Überbrückungselement mit wenigstens einer elektrisch leitfähigen Schicht angeordnet, das als mechanischer Energiespeicher ausgebildet oder mit einem mechanischen Energiespeicher verbunden ist, der durch thermische Auslösung von einem ersten mechanischen Zustand in einen stabilen zweiten mechanischen Zustand überführbar ist. Ein mechanischer Energiespeicher kann dabei bspw. ein vorgespanntes mechanisches Element oder ein Element sein, das wenigstens zwei unterschiedliche stabile mechanische Zustände aufweist, bspw. ein Aktor aus einer Formgedächtnislegierung oder ein Bimetall-element. Der mechanische Energiespeicher ist dabei so ausgebildet und angeordnet, dass die elektrisch leitfähige Schicht des Überbrückungselements in dem stabilen zweiten mechanischen Zustand des mechanischen Energiespeichers die Oberflächenbereiche der beiden elektrischen Leiter elektrisch kontaktiert und damit die beiden elektrischen Leiter kurzschließt. Weiterhin ist ein reaktives Element über den Oberflächenbereichen angeordnet, beispielsweise als weitere Schicht des Überbrückungselementes oder als separates Element, in dem sich eine exotherme Reaktion auslösen lässt, durch die der mechanische Energiespeicher in den zweiten mechanischen Zustand übergeht. Im nicht ausgelösten Zustand der Überbrückungseinrichtung befindet sich der mechanische Energiespeicher im ersten mechanischen Zustand, in dem die elektrischen Leiter nicht durch die elektrisch leitfähige Schicht des Überbrückungselementes kurzgeschlossen werden. Das reaktive Element kann als reaktive Schicht ausgebildet sein, die Bestandteil des Überbrückungselementes ist. Bei einer Ausbildung als separates Element liegt das reaktive Element vorzugsweise am Überbrückungselement an, ist aber nicht stoffschlüssig mit dem Überbrückungselement verbunden.

Unter dem Begriff der reaktiven Schicht bzw. des reaktiven Elementes ist in der vorliegenden Patentanmeldung eine Schicht oder Folie aus einem reaktiven Material zu verstehen, die auch als zusammenhängende Schichtfolge aus unterschiedlichen Schichtmaterialien, d.h. als Schichtstapel, ausgebildet sein kann. Zur Auslösung der Überbrückungseinrichtung muss lediglich die exotherme Reaktion in der reaktiven Schicht bzw. dem reaktiven Element ausgelöst werden. Durch die damit erzeugte Wärmeenergie wird der mechanische Energiespeicher in den zweiten mechanischen Zustand überführt, in dem die elektrisch leitfähige Schicht des Überbrückungselementes die beiden elektrischen Leiter elektrisch kontaktiert und damit kurzschließt. Da es sich bei dem zweiten mechanischen Zustand um einen stabilen Zustand handelt, verbleibt der mechanische Energiespeicher auch ohne weitere Wärmeeinwirkung in diesem Zustand.

Die Auslösung der exothermen Reaktion in dem reaktiven Element kann - je nach Art des reaktiven Materials - beispielsweise durch Stromfluss, Erwärmung, Funkeneinwirkung, Laserbestrahlung oder mit Hilfe eines Initialzünders erfolgen. Ein Beispiel für ein reaktives Element ist eine reaktive Nanofolie, bspw. eine reaktive Ni/Al-Folie, wie sie bspw. aus der WO 01/83182 A1 bekannt ist. Derartige Nanofolien setzen sich aus einer großen Anzahl von Nanoschichten zusammen, bspw. mit Schichtdicken im Bereich von 1nm bis 500nm, wobei sich in der Regel Schichten aus zwei unterschiedlichen Materialien abwechseln, die durch geeigneten Energieeintrag exotherm miteinander reagieren. Auch andere reaktive Schichten sind in der vorgeschlagenen Überbrückungseinrichtung einsetzbar, bspw. Schichten aus Nanothermit oder anderen exotherm reagierenden Materialien.

Mit der vorgeschlagenen Überbrückungseinrichtung lässt sich eine Energiequelle, bspw. eine Batteriezelle, oder ein elektrischer Verbraucher als zu überbrückendes Bauelement durch Auslösen der exothermen Reaktion niederohmig elektrisch überbrücken. Im ausgelösten Zustand kann dabei ein Widerstand von kleiner 100µΩ bei einer aktiven Fläche (Fläche unter der reaktiven Schicht) von ca. 1cm² erreicht werden. Im nichtausgelösten Zustand kann die Überbrückungseinrichtung - je nach Ausgestaltung - einen Widerstand von größer 40MΩ aufweisen. Die vorgeschlagene Überbrückungseinrichtung ermöglicht damit auch den Durchfluss hoher Ströme, wie sie bei den eingangs genannten Anwendungen auftreten können, und lässt sich aufgrund des einfachen Aufbaus kostengünstig realisieren.

In einer bevorzugten Ausgestaltung der vorgeschlagenen Überbrückungseinrichtung wird die irreversible elektrische Kontaktierung der beiden elektrischen Leiter durch Herstellung einer Lotverbindung unterstützt. In einer ersten vorteilhaften Ausgestaltung sind dabei der erste und der zweite Oberflächenbereich jeweils mit einer Schicht aus einem elektrisch leitfähigen Material bedeckt, das einen niedrigeren Schmelzpunkt als das Material der elektrischen Leiter aufweist. Vorzugsweise handelt es sich dabei um ein metallisches Lotmaterial. Prinzipiell sind aber auch andere Materialen möglich, bspw. elektrisch leitfähige Polymermaterialien. Das reaktive Element ist dabei so dimensioniert und am Überbrückungselement angeordnet, dass die beiden Schichten aus dem elektrisch leitfähigen Material durch die bei der exothermen Reaktion der reaktiven Schicht abgegebene Wärmeenergie aufschmelzen und dadurch eine Lotverbindung mit der elektrisch leitfähigen Schicht des Überbrückungselementes herstellen, die im ausgelösten Zustand der Überbrückungseinrichtung auf den Oberflächenbereichen bzw. den darauf aufgebrachten Lotschichten aufliegt.

In einer zweiten vorteilhaften Ausgestaltung ist das Überbrückungselement auf einer zu den Oberflächenbereichen gerichteten Seite mit einer Schicht aus einem elektrisch leitfähigen Material bedeckt, das einen niedrigeren Schmelzpunkt als die elektrischen Leiter aufweist. Auch dies ist vorzugsweise ein metallisches Lotmaterial, kann aber auch ein anderes Material, wie bspw. ein elektrisch leitfähiges Polymermaterial sein. Bei dieser Schicht kann es sich um eine zusätzliche Schicht handeln, die zusätzlich zu einer elektrisch leitfähigen Schicht und ggf. zur reaktiven Schicht am Überbrückungselement ausgebildet ist. Es kann sich bei dieser Schicht auch um die einzige elektrisch leitfähige Schicht des Überbrückungselementes handeln. Die reaktive Schicht bzw. das reaktive Element ist dabei wiederum so dimensioniert und angeordnet, dass das elektrisch leitfähige Material durch die bei der exothermen Reaktion der reaktiven Schicht abgegebene Wärmeenergie aufschmilzt und dadurch eine Lotverbindung mit den elektrischen Leitern ausbildet, auf denen das Überbrückungselement im ausgelösten Zustand der Überbrückungseinrichtung aufliegt. Auch eine Kombination der ersten und zweiten vorteilhaften Ausgestaltung ist möglich, wobei dann sowohl die beiden Oberflächenbereiche der elektrischen Leiter als auch die diesen Oberflächenbereichen gegenüberliegende Seite des Überbrückungselementes eine entsprechende Schicht aus einem zur Herstellung einer Lotverbindung geeigneten elektrisch leitfähigen Material aufweisen.

Sowohl die elektrische Isolation zwischen den beiden elektrischen Leitern als auch die Isolation wenigstens eines der Oberflächenbereiche zum Überbrückungselement werden in Anpassung an die jeweilige Anwendung gewählt. Die Isolation zwischen den beiden elektrischen Leitern kann dabei über einen Luftspalt und auch durch Nutzung eines Isolationsmaterials zwischen den beiden elektrischen Leitern gewährleistet werden.

Die beiden elektrischen Leiter sind vorzugsweise so strukturiert, dass eine möglichst lange Grenzlinie zwischen den zu überbrückenden Oberflächenbereichen dieser Leiter entsteht. In einer bevorzugten Ausgestaltung umschließt dabei der erste Oberflächenbereich (des ersten Leiters) den zweiten Oberflächenbereich (des zweiten Leiters). Das Überbrückungselement ist dabei vorzugsweise so ausgebildet, dass es den zweiten Oberflächenbereich, den Spalt zwischen den beiden Oberflächenbereichen und wenigstens einen Teil des ersten Oberflächenbereiches überdeckt.

In einer vorteilhaften Ausgestaltung ist das Überbrückungselement selbst als mechanischer Energiespeicher ausgebildet. Hierzu weist das Überbrückungselement vorzugsweise einen Schichtverbund aus wenigstens zwei Materialien unterschiedlicher thermischer Ausdehnung auf, der zwei stabile Biegungszustände als ersten und zweiten mechanischen Zustand einnehmen kann. Vorzugsweise stellt dieser Schichtverbund eine Bimetallschicht dar. Der Begriff Schicht umfasst in der vorliegenden Patentanmeldung auch selbst tragende, d.h. plattenförmige Elemente, so dass es sich bei dem obigen Schichtverbund auch um ein Bimetallplättchen handeln kann. Die Bimetallschicht stellt dabei gleichzeitig eine elektrisch leitfähige Schicht des Überbrückungselementes dar. Bei einer Kombination dieser Ausgestaltung mit einer Anordnung der elektrischen Leiter, bei der der erste Oberflächenbereich den zweiten Oberflächenbereich umschließt, ist das Überbrückungselement vorzugsweise im nicht ausgelösten Zustand (erster mechanischer Zustand) kuppelförmig über den Oberflächenbereichen ausgebildet. Bei Auslösung des Überbrückungselementes wölbt sich dann das Überbrückungselement nach unten und stellt die elektrisch leitfähige Verbindung zwischen den beiden elektrischen Leitern her.

In anderen vorteilhaften Ausgestaltung der vorgeschlagenen Überbrückungseinrichtung ist der mechanische Energiespeicher getrennt vom Überbrückungselement ausgebildet und mit diesem verbunden. Der mechanische Energiespeicher wird dabei im nichtausgelösten Zustand der Überbrückungseinrichtung, in dem er sich im ersten mechanischen Zustand befindet, durch eine Rückhaltekraft des reaktiven Elementes daran gehindert, vom ersten in den zweiten mechanischen Zustand überzugehen. Vorzugsweise handelt es sich bei dem mechanischen Energiespeicher dabei um ein elastisches Element, beispielsweise ein Federelement, das durch das reaktive Element in einem vorgespannten Zustand als ersten mechanischen Zustand gehalten wird. Bei Auslösung der exothermen Reaktion wird das reaktive Element zerstört oder verliert zumindest seine Rückhaltekraft, so dass dadurch der mechanische Energiespeicher in seinen zweiten mechanischen Zustand übergehen kann und das Überbrückungselement dabei gegen die beiden Oberflächenbereiche drückt. Zur Erzeugung der Rückhaltekraft muss das reaktive Element geeignet auf einem oder mehreren Abstandshaltern aufliegen, die vorzugsweise um den elektrisch zu kontaktierenden Bereich angeordnet sind. Hierbei kann es sich bspw. um einen geeigneten Rahmen handeln. Die weiteren Bestandteile des Überbrückungselements sind dabei so ausgeführt, dass sie nicht auf diesen Abstandshaltern oder diesem Rahmen aufliegen. Diese Ausgestaltung erfordert ein reaktives Element, das eine geeignete Rückhaltekraft ausüben kann. Dies trifft vor allem für die bereits angeführten reaktiven Nanofolien zu, die ausreichende Rückhaltekräfte bieten und diese durch die Auslösung der exothermen Reaktion verlieren.

Die Auslösung der exothermen Reaktion kann bspw. thermisch über einen Stromfluss durch das reaktive Element erfolgen. So kann das reaktive Element bspw. durch einen oder mehrere Kontaktpins kontaktiert werden, um eine elektrische Spannung anzulegen. Es kann auch über eine geeignete Strukturierung eine Engstelle im reaktiven Element erzeugt werden, an der bei Stromfluss aufgrund des erhöhten Widerstands eine entsprechende Wärmeerzeugung erreicht wird. Das reaktive Element kann auch optisch, bspw. durch einen Licht- oder Laserpuls aktiviert bzw. ausgelöst werden. In einer weiteren Ausgestaltung kann ein Initialzünder eingesetzt werden, beispielsweise in Form eines reaktiven Drahtes, der in Kontakt mit oder wenigstens in der Nähe des reaktiven Elements angeordnet ist. Ein derartiger reaktiver Draht besteht ebenfalls aus einem reaktiven Material, bspw. einer Schichtfolge aus Al und Pd, und kann bspw. thermisch durch einen Stromfluss ausgelöst werden. Derartige reaktive Drähte sind auch kommerziell erhältlich, bspw. unter der Bezeichnung Pyrofuze^{®}. Auch eine Auslösung der reaktiven Schicht durch elektrische Funken ist möglich. Dies stellt selbstverständlich keine abschließende Aufzählung dar.

Mit der vorgeschlagenen Überbrückungseinrichtung wird eine irreversibel aktivierbare elektrische Verbindung mit geringem Widerstand bereitgestellt. Damit kann ein fehlerhaftes Bauelement in einem Strompfad überbrückt und so die Funktion des Gesamtsystems gewährleistet werden. Beispiele sind das Überbrücken von defekten Bauteilen und Baugruppen, insbesondere Energiespeicher, wie bspw. Batteriezellen, Akkumulatoren, Doppelschichtkondensatoren, Lithium-Ionen oder Kondensatoren, von Brennstoffzellen oder elektrischen Verbrauchern. Weiterhin lassen sich mit der vorgeschlagenen Überbrückungseinrichtung Energiespeicher wie z.B. Lithium-Ionen Batteriezellen durch Auslösung einer Schmelzsicherung oder eines Shutdown-Separators, mit kurzzeitigen Kurzschlussströmen im 10kA-Bereich, deaktivieren.

### Kurze Beschreibung der Zeichnungen

Die vorgeschlagene Überbrückungseinrichtung wird nachfolgend anhand von zwei Ausführungsbeispielen nochmals näher erläutert. Hierbei zeigen:
- Fig. 1: eine Schnittdarstellung eines ersten Beispiels einer Überbrückungseinrichtung im nichtausgelösten Zustand;
- Fig. 2: das Beispiel der Figur 1 im ausgelösten Zustand;
- Fig. 3: eine Schnittdarstellung eines zweiten Beispiels der vorgeschlagenen Überbrückungseinrichtung im nichtausgelösten Zustand; und
- Fig. 4: das Beispiel der Figur 3 im ausgelösten Zustand.

### Wege zur Ausführung der Erfindung

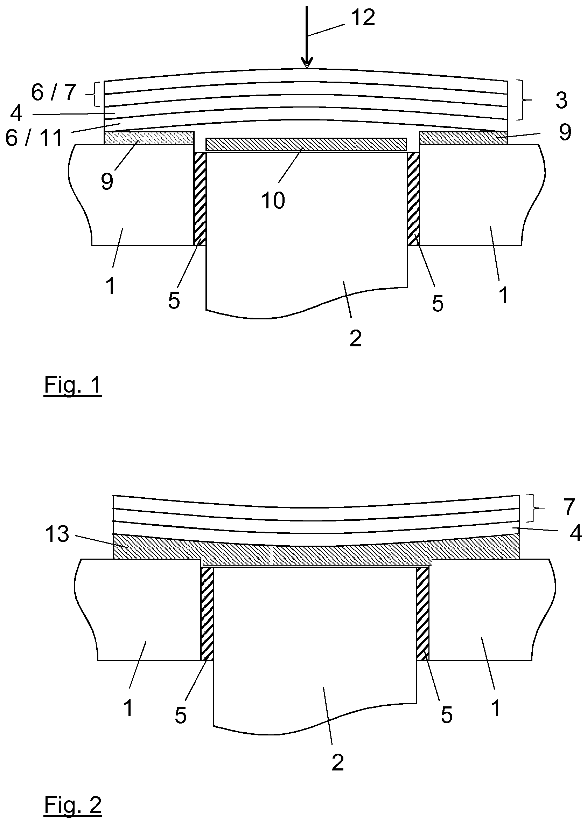

Figur 1 zeigt ein erstes Beispiel einer Ausgestaltung der vorgeschlagenen Überbrückungseinrichtung. Die Überbrückungseinrichtung weist zwei gegeneinander isolierte Elektroden 1, 2 auf. Die Elektroden sind so strukturiert, dass eine möglichst lange Grenzlinie zwischen ihren auf der Oberseite nahe beieinander liegenden Oberflächenbereichen entsteht. Im vorliegenden Fall wird dies durch einen rotationssymmetrischen Aufbau erreicht, bei dem der Oberflächenbereich der ersten Elektrode 1 den Oberflächenbereich der zweiten Elektrode 2 vollständig ringförmig umschließt. Zwischen den beiden Elektroden 1, 2 befindet sich elektrisches Isolationsmaterial 5, das auch als Distanzhalter fungiert. Auf den aneinandergrenzenden Oberflächenbereichen der beiden Elektroden 1, 2 befindet sich jeweils eine Lotschicht 9, 10. Über den Oberflächenbereichen ist ein Überbrückungselement 3 angeordnet, das wenigstens eine elektrisch leitfähige Schicht 6 aufweist, mit dem die beiden Elektroden 1, 2 elektrisch miteinander verbunden werden können. Im vorliegenden Beispiel besteht dieses Überbrückungselement 3 aus einem Bimetallelement 7 aus zwei Bimetallschichten, einer reaktiven Schicht 4 und einer Lotschicht 11. Sowohl die Lotschicht 11 als auch das Bimetallelement 7 können als elektrisch leitfähige Schicht 6 angesehen werden. Das Bimetallelement 7 ist so geformt, dass es zwei stabile mechanische Zustände einnehmen kann und somit einen bistabilen mechanischen Energiespeicher darstellt. Figur 1 zeigt dabei den ersten stabilen mechanischen Zustand, bei dem das Überbrückungselement 3 mit dem Bimetallelement 7 nach oben gewölbt ist und damit keine elektrische Verbindung zwischen den beiden Elektroden 1, 2 herstellt.

Zur Aktivierung der Überbrückungseinrichtung wird die exotherme Reaktion in der reaktiven Schicht 4 ausgelöst. Durch die daraus resultierende Erwärmung springt das Bimetall-Element 7 in seinen stabileren zweiten geometrischen bzw. mechanischen Zustand, bei dem es nach unten gewölbt ist und somit die beiden Elektroden 1, 2 über die Lotschichten 9, 10, 11 elektrisch verbindet, die durch die Wärmeenergie bei der exothermen Reaktion miteinander verschmelzen.

Das Überbrückungselement 3 ist so angeordnet, dass zwischen der Lotschicht 11 am Überbrückungselement und der Lotschicht 10 der zweiten Elektrode 2 ein Mindestabstand eingehalten wird, um die Isolation zwischen den beiden Elektroden 1, 2 im nichtausgelösten Zustand der Überbrückungseinrichtung aufrechtzuerhalten. Das Überbrückungselement 3 liegt hierbei auf der äußeren Elektrode 1 auf, wie dies in der Figur dargestellt ist. Das Überbrückungselement 3 kann jedoch auch isoliert von der ersten Elektrode 1 angeordnet sein, wodurch eine vom geschalteten Strompfad galvanisch getrennte Auslösung ermöglicht wird. Das Überbrückungselement 3 ist in diesem Beispiel vorzugsweise kuppel- oder annähernd kalottenförmig geformt über den beiden Oberflächenbereichen ausgebildet und angeordnet, so dass der Reaktionsraum nach außen geschlossen ist.

Diese Überbrückungseinrichtung ist prinzipiell sowohl für geringe Spannungen (z. B. Batteriezellen mit wenigen Volt) als auch für höhere Spannungen (z. B. Batteriemodul, Batteriepack und Brennstoffzellen mit mehreren 100 V) geeignet. Aufgrund der begrenzten Durchbiegung des Bimetall-Elementes 7 mit der damit verbundenen Begrenzung des maximalen Abstandes zu den Elektroden ist die Spannungsfestigkeit einer derartigen Ausgestaltung allerdings begrenzt.

Prinzipiell kann auch entweder auf die Lotschicht 11 am Überbrückungselement 3 oder auf die Lotschichten 10, 11 auf den Oberflächenbereichen der Elektroden 1 verzichtet werden, da die elektrische Verbindung auch nur durch die Lotschicht 11 am Überbrückungselement 3 oder durch die Lotschichten 9, 10 auf den Elektroden 1, 2 hergestellt werden kann. Auch ein vollständiger Verzicht auf die Lotschichten ist prinzipiell möglich. Dies würde jedoch die elektrische Leitfähigkeit und die mechanische Stabilität der Verbindung zwischen den beiden Elektroden gegenüber einer Ausgestaltung mit Lotschichten verringern.

Das exotherm reagierende Material der reaktiven Schicht 4, bspw. einer reaktiven Ni/Al-Folie, kann durch Stromfluss, Funken, Laser oder einen Initialzünder, bspw. über einen reaktiven Al/Pd-Draht ausgelöst werden. In der Figur 1 ist hierbei schematisch ein Auslösekontakt 12 angedeutet. Bei der Auslösung der exothermen Reaktion werden die Lotschichten 9, 10, 11 aufgeschmolzen, was zu einer dauerhaften elektrischen und mechanischen Verbindung führt. Dieser Vorgang kann auch durch einen einsetzenden Stromfluss unterstützt werden.

In Figur 2 ist hierzu beispielhaft die Situation im ausgelösten Zustand dargestellt, bei der die Lotschichten 9, 10, 11 zu einer einzigen Lotschicht 13 verschmolzen sind, um die dauerhafte elektrische Verbindung zwischen den beiden Elektroden 1, 2 herzustellen.

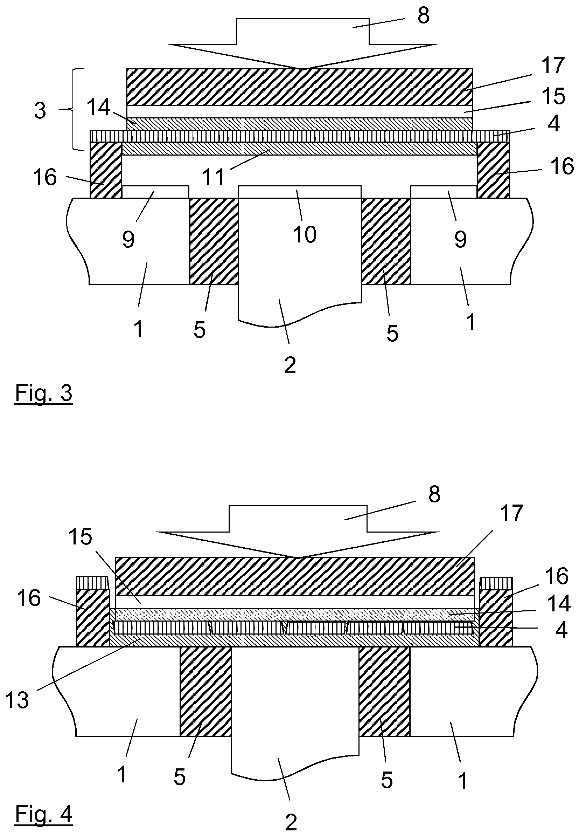

Figur 3 zeigt ein weiteres Beispiel für eine Ausgestaltung der vorgeschlagenen Überbrückungseinrichtung, bei dem wiederum der Oberflächenbereich der äußeren Elektrode 1 den Oberflächenbereich der inneren Elektrode 2 vollständig umschließt. Dies kann im vorliegenden Beispiel sowohl rotationssymmetrisch als auch in Rechteckform erfolgen. Die beiden Elektroden 1, 2 sind wiederum durch einen geeigneten Isolator 5 voneinander isoliert. Auf den Oberflächenbereichen der Elektroden 1, 2 befindet sich jeweils wiederum eine Lotschicht 9, 10. Oberhalb der Elektroden ist das Überbrückungselement 3 angeordnet, das im vorliegenden Beispiel auf einem oder mehreren Abstandshaltern 16 aufliegt, wie dies in der Figur dargestellt ist. Der oder die Abstandshalter 16 können dabei sowohl aus einem Isolator als auch aus einem elektrisch leitfähigen Material bestehen. Die Nutzung eines elektrisch isolierenden Abstandshalters hat wiederum den Vorteil, dass eine vom geschalteten Strompfad galvanisch getrennte Auslösung ermöglicht wird. Vorzugsweise ist der Abstandshalter 16 als umlaufender Rahmen ausgebildet, so dass auch hier ein geschlossener Reaktionsraum über den Oberflächenbereichen der Elektroden 1, 2 gebildet wird. Das Überbrückungselement 3 liegt dabei nur mit der reaktiven Schicht 4 auf diesem Abstandshalter 16 auf. Oberhalb und unterhalb der reaktiven Schicht 4 sind jeweils Lotschichten 11, 14 ausgebildet.

Oberhalb der oberen Lotschicht 14 ist zusätzlich eine elektrisch leitfähige Schicht 15, bspw. ein Metallplättchen, angeordnet. Die obere Lotschicht 14 kann dabei auch weggelassen werden. Das Gleiche gilt für die Lotschicht 11 oder die beiden Lotschichten 9, 10 wie bereits in Verbindung mit dem vorangegangenen Ausführungsbeispiel erläutert wurde.

Als mechanischer Energiespeicher wird im vorliegenden Beispiel ein vorgespanntes Federelement 8 eingesetzt, das in den Figuren 3 und 4 durch die von diesem Federelement 8 ausgeübte Kraftrichtung angedeutet ist. Das Federelement 8 liefert den notwendigen Anpressdruck bei Auslösung der Überbrückungseinrichtung und wird in seinem vorgespannten ersten mechanischen Zustand durch die Rückhaltekraft der reaktiven Schicht 4 gehalten. Zwischen dem Federelement 8 und der reaktiven Schicht 4 befindet sich die elektrisch leitfähige Schicht 15 sowie optional die weitere Lotschicht 14, um den Widerstand des Überbrückungselementes im ausgelösten Zustand zu reduzieren. Die reaktive Schicht 4 liegt mit ihrem Rand auf dem isolierenden oder leitenden Abstandsrahmen 16 auf und hält so das Überbrückungselement 3 in seiner Position.

Ausgelöst wird die Überbrückungseinrichtung durch die exotherme Reaktion der reaktiven Schicht 4. Hierdurch wird zum einen die Lotbeschichtung 11, 14 der reaktiven Schicht aufgeschmolzen und zum anderen die mechanische Rückhaltung des Federelementes 8 zerstört. In der Folge wird das Überbrückungselement auf die unteren Elektroden 1, 2 bzw. die darauf befindlichen Lotschichten 9, 10 gedrückt und die Lotschichten verschmelzen miteinander. Dies führt zu einer dauerhaften elektrischen und mechanischen Verbindung zwischen den Elektroden 1, 2. Dieser Vorgang kann durch einen einsetzenden Stromfluss unterstützt werden, sobald sich eine erste Verbindung etabliert hat. Die Auslösung des exothermen Materials der reaktiven Schicht 4 kann in gleicher Weise erfolgen, wie dies bereits in Verbindung mit dem vorangegangenen Ausführungsbeispiel erläutert wurde. Figur 4 zeigt die Situation im ausgelösten Zustand, bei dem das Überbrückungselement 3 gegen die Elektroden 1, 2 gedrückt wird. Die Zerstörung der reaktiven Schicht 4 ist in dieser Figur ebenfalls schematisch angedeutet. Im vorliegenden Beispiel ist zwischen der elektrisch leitfähigen Schicht 15 und dem Federelement 8 eine zusätzliche thermische Isolationsschicht 17 vorgesehen. Diese Schicht dient dazu, eine Abführung der durch die exotherme Reaktion erzeugten Wärme zu verhindern.

Grundsätzlich kann das Andruckelement, im vorliegenden Beispiel ein Federelement, sowohl aus einem elektrisch leitenden Material, bspw. einem Metall wie Kupfer oder Aluminium, oder auch aus einem elektrisch isolierenden Material, bspw. einem Kunststoff bestehen. Dieses Andruckelement kann dabei fest mit dem Überbrückungselement verbunden sein oder auch nur lose an diesem Element anliegen. Das Andruckelement stellt den mechanischen Energiespeicher dar und ist zwischen dem Überbrückungselement und einer Trägerstruktur, bspw. einem Gehäuse der Überbrückungseinrichtung, eingespannt. Dies ist in den Figuren nicht zu erkennen.

Die Überbrückungseinrichtung ist prinzipiell sowohl für geringe Spannungen (z. B. Batteriezellen mit wenigen Volt) als auch für höhere Spannungen (z. B. Batteriemodul, Batteriepack und Brennstoffzellen mit mehreren 100 V) geeignet. Im vorliegenden Beispiel der Figuren 3 und 4 kann ein relativ großer Isolationsabstand zwischen den Elektroden 1, 2 und auch zwischen den Elektroden und dem Überbrückungselement 3 eingestellt werden. Damit lässt sich diese Überbrückungseinrichtung für höhere elektrische Spannungen nutzen als die Überbrückungseinrichtung der Figuren 1 und 2.

Vorzugsweise wird die vorgeschlagene Überbrückungseinrichtung, wie sie in den vorangehenden Beispielen erläutert wurde, in oder an eine Batteriezelle integriert, d.h. im Batteriezellengehäuse oder am Batteriezellengehäuse.

### Bezugszeichenliste

- 1: erste Elektrode
- 2: zweite Elektrode
- 3: Überbrückungselement
- 4: reaktive Schicht
- 5: Isolator
- 6: elektrisch leitfähige Schicht
- 7: Bimetall-Element
- 8: Federelement
- 9: Lotschicht
- 10: Lotschicht
- 11: Lotschicht
- 12: Auslösekontakt
- 13: Lotschicht
- 14: Lotschicht
- 15: elektrisch leitfähige Schicht
- 16: Abstandshalter bzw. Rahmen
- 17: thermischer Isolator

## Patentansprüche

1. Elektrische Überbrückungseinrichtung, die
- wenigstens einen ersten (1) und einen zweiten elektrischen Leiter (2) aufweist, die elektrisch voneinander isoliert und so angeordnet sind, dass wenigstens ein erster in eine Raumrichtung orientierter Oberflächenbereich des ersten Leiters (1) über einen Spalt von wenigstens einem zweiten in die gleiche Raumrichtung orientierten Oberflächenbereich des zweiten Leiters (2) beabstandet ist, wobei der erste Oberflächenbereich den zweiten Oberflächenbereich umschließt,
- über den beiden Oberflächenbereichen ein Überbrückungselement (3) mit wenigstens einer elektrisch leitfähigen Schicht (6, 11, 14, 15) angeordnet ist,
wobei das Überbrückungselement so ausgebildet ist, dass es den zweiten Oberflächenbereich, den Spalt zwischen den Oberflächenbereichen und wenigstens einen Teil des ersten Oberflächenbereichs überdeckt, und
wobei das Überbrückungselement als mechanischer Energiespeicher (7) ausgebildet ist, der durch thermische Auslösung von einem ersten mechanischen Zustand in einen stabilen zweiten mechanischen Zustand überführbar ist, in dem die elektrisch leitfähige Schicht (6, 11, 14, 15) des Überbrückungselements (3) die Oberflächenbereiche elektrisch kontaktiert und damit die beiden elektrischen Leiter (1, 2) kurzschließt,
- wobei eine Schicht oder Folie aus einem oder mehreren durch geeigneten Energieeintrag exotherm reagierenden Materialien als reaktives Element (4) über den beiden Oberflächenbereichen angeordnet ist, in dem sich eine exotherme Reaktion auslösen lässt, durch deren Wärmeenergie der mechanische Energiespeicher (7, 8) in den stabilen zweiten mechanischen Zustand übergeht.

2. Elektrische Überbrückungseinrichtung, die
- wenigstens einen ersten (1) und einen zweiten elektrischen Leiter (2) aufweist, die elektrisch voneinander isoliert und so angeordnet sind, dass wenigstens ein erster in eine Raumrichtung orientierter Oberflächenbereich des ersten Leiters (1) über einen Spalt von wenigstens einem zweiten in die gleiche Raumrichtung orientierten Oberflächenbereich des zweiten Leiters (2) beabstandet ist, wobei der erste Oberflächenbereich den zweiten Oberflächenbereich umschließt,
- über den beiden Oberflächenbereichen ein Überbrückungselement (3) mit wenigstens einer elektrisch leitfähigen Schicht (6, 11, 14, 15) angeordnet ist,
wobei das Überbrückungselement so ausgebildet ist, dass es den zweiten Oberflächenbereich, den Spalt zwischen den Oberflächenbereichen und wenigstens einen Teil des ersten Oberflächenbereichs überdeckt, und
wobei das Überbrückungselement mit einem mechanischen Energiespeicher (8) der elektrischen Überbrückungseinrichtung verbunden ist, der durch thermische Auslösung von einem ersten mechanischen Zustand in einen stabilen zweiten mechanischen Zustand überführbar ist, in dem die elektrisch leitfähige Schicht (6, 11, 14, 15) des Überbrückungselements (3) die Oberflächenbereiche elektrisch kontaktiert und damit die beiden elektrischen Leiter (1, 2) kurzschließt,
- wobei eine Schicht oder Folie aus einem oder mehreren durch geeigneten Energieeintrag exotherm reagierenden Materialien als reaktives Element (4) über den beiden Oberflächenbereichen angeordnet ist, in dem sich eine exotherme Reaktion auslösen lässt, durch deren Wärmeenergie der mechanische Energiespeicher (7, 8) in den stabilen zweiten mechanischen Zustand übergeht.

3. Überbrückungseinrichtung nach Anspruch 1 oder 2, **dadurch gekennzeichnet,**
**dass** der erste und der zweite Oberflächenbereich jeweils mit einer Schicht (9, 10) aus einem elektrisch leitfähigen Material bedeckt ist, das einen niedrigeren Schmelzpunkt als die elektrischen Leiter (1, 2) aufweist, und
das reaktive Element (4) so dimensioniert und angeordnet ist, dass die beiden Schichten (9, 10) aus dem elektrisch leitfähigen Material durch die bei der exothermen Reaktion des reaktiven Elementes (4) abgegebene Wärmeenergie aufschmelzen und dadurch eine Lotverbindung mit der elektrisch leitfähigen Schicht (6, 11, 14, 15) des Überbrückungselements (3) herstellen.

4. Überbrückungseinrichtung nach einem der Ansprüche 1 bis 3, **dadurch gekennzeichnet,**
**dass** das Überbrückungselement (3) auf einer zu den Oberflächenbereichen gerichteten Seite mit einer Schicht (11) aus einem elektrisch leitfähigen Material bedeckt ist, das einen niedrigeren Schmelzpunkt als die elektrischen Leiter (1, 2) aufweist, oder die elektrisch leitfähige Schicht (6) des Überbrückungselements (3) aus einem derartigen Material gebildet ist, und
das reaktive Element (4) so dimensioniert und angeordnet ist, dass dieses elektrisch leitfähige Material durch die bei der exothermen Reaktion des reaktiven Elements (4) abgegebene Wärmeenergie aufschmilzt und dadurch eine Lotverbindung mit den elektrischen Leitern (1, 2) oder dem auf den Oberflächenbereichen der elektrischen Leiter (1, 2) aufgebrachten elektrisch leitfähigen Material hergestellt wird.

5. Überbrückungseinrichtung nach einem der Ansprüche 1, 3 oder 4, **dadurch gekennzeichnet,**
**dass** das Überbrückungselement (3) als mechanischen Energiespeicher (7) einen Schichtverbund aus wenigstens zwei Materialien unterschiedlicher thermischer Ausdehnung aufweist, der zwei stabile Biegungszustände als ersten und zweiten mechanischen Zustand einnehmen kann.

6. Überbrückungseinrichtung nach Anspruch 5,
**dadurch gekennzeichnet,**
**dass** der Schichtverbund durch eine Bimetallschicht gebildet ist.

7. Überbrückungseinrichtung nach Anspruch 5 oder 6,
**dadurch gekennzeichnet,**
**dass** das Überbrückungselement (3) kuppelförmig über dem umschlossenen Bereich ausgebildet ist.

8. Überbrückungseinrichtung nach Anspruch 7,
**dadurch gekennzeichnet,**
**dass** der zweite Oberflächenbereich in der Höhe versetzt unterhalb des ersten Oberflächenbereiches angeordnet ist.

9. Überbrückungseinrichtung nach einem der Ansprüche 2 bis 4, **dadurch gekennzeichnet,**
**dass** der mechanische Energiespeicher (8) vor dem Auslösen der exothermen Reaktion durch eine Rückhaltekraft des reaktiven Elements (4) davon abgehalten wird, vom ersten in den zweiten mechanischen Zustand zu gehen.

10. Überbrückungseinrichtung nach Anspruch 9,
**dadurch gekennzeichnet,**
**dass** der mechanische Energiespeicher (8) ein elastisches Element, insbesondere ein Federelement ist, das durch das reaktive Element (4) in einem vorgespannten Zustand als erstem mechanischen Zustand gehalten wird.

11. Überbrückungseinrichtung nach Anspruch 10,
**dadurch gekennzeichnet,**
**dass** eine Trägerstruktur über dem Überbrückungselement (3) und dem elastischen Element angeordnet und fest mit dem ersten und/oder zweiten elektrischen Leiter (1, 2) verbunden ist, wobei das elastische Element zwischen der Trägerstruktur und dem Überbrückungselement (3) eingespannt ist.

12. Überbrückungseinrichtung nach einem der Ansprüche 9 bis 11, **dadurch gekennzeichnet,**
**dass** die reaktive Schicht (4) auf einem oder mehreren um den umschlossenen Bereich angeordneten Abstandshaltern (16) aufliegt.

13. Überbrückungseinrichtung nach einem der Ansprüche 9 bis 12, **dadurch gekennzeichnet,**
**dass** das Überbrückungselement (3) am Übergang zum mechanischen Energiespeicher (8) eine thermisch isolierende Schicht (17) aufweist.

14. Batteriezelle, in die eine Überbrückungseinrichtung nach einem der Ansprüche 1 bis 13 integriert oder an der eine Überbrückungseinrichtung nach einem der Ansprüche 1 bis 13 angeordnet ist.

## Claims

1. An electrical bypass device having
- at least one first (1) and one second (2) electrical conductor, which are electrically insulated from one another and are arranged such that at least a first surface region of the first conductor (1) orientated in one spatial direction is spaced apart from at least a second surface region of the second conductor (2) orientated in the same spatial direction by a gap, wherein the first surface region surrounds the second surface region,
- a bypass element (3) having at least one electrically conductive layer (6, 11, 14, 15) is arranged above the two surface regions,
wherein the bypass element is designed in such manner that it covers the second surface region, the gap between the surface regions, and at least a part of the first surface region, and
wherein the bypass element is designed as a mechanical energy store (7) which can be converted by thermal activation from a first mechanical state into a stable, second mechanical state in which the electrically conductive layer (6, 11, 14, 15) of the bypass element (3) makes electrical contact with the surface regions and consequently short circuits the two electrical conductors (1, 2),
- wherein a layer or film made of one or more materials that react exothermally upon in response to suitable energy input is arranged above the two surface regions as a reactive element (4), in which an exothermic reaction can be triggered, the thermal energy from which causes the mechanical energy store (7, 8) to be converted to the stable, second mechanical state.

2. An electrical bypass device having
- at least one first (1) and one second (2) electrical conductor, which are electrically insulated from one another and are arranged such that at least a first surface region of the first conductor (1) orientated in one spatial direction is spaced apart from at least a second surface region of the second conductor (2) orientated in the same spatial direction by a gap, wherein the first surface region surrounds the second surface region,
- a bypass element (3) having at least one electrically conductive layer (6, 11, 14, 15) is arranged above the two surface regions,
wherein the bypass element is designed in such manner that it covers the second surface region, the gap between the surface regions, and at least a part of the first surface region, and
wherein the bypass element is connected to a mechanical energy store (8) of the electrical bypass device which can be converted by thermal activation from a first mechanical state into a stable, second mechanical state in which the electrically conductive layer (6, 11, 14, 15) of the bypass element (3) makes electrical contact with the surface regions and consequently short circuits the two electrical conductors (1, 2),
- wherein a layer or film made of one or more materials that react exothermally upon in response to suitable energy input is arranged above the two surface regions as a reactive element (4), in which an exothermic reaction can be triggered, the thermal energy from which causes the mechanical energy store (7, 8) to be converted to the stable, second mechanical state.

3. The bypass device according to Claim 1 or 2,
**characterized in that**
the first and the second surface regions are each covered with a layer (9, 10) of an electrically conductive material, which has a lower melting point than the electrical conductors (1, 2), and
the reactive element (4) is dimensioned and arranged so that the two layers (9, 10) of the electrically conductive material are melted by the thermal energy released in the exothermic reaction of the reactive element (4) and thus form a soldered connection with the electrically conductive layer (6, 11, 14, 15) of the bypass element (3).

4. The bypass device according to any one of Claims 1 to 3, **characterized in that**
a side of the bypass element (3) facing the surface regions is covered with a layer (11) of an electrically conductive material which has a lower melting point than the electrical conductors (1, 2), or the electrically conductive layer (6) of the bypass element (3) is made from a material of such kind, and
the reactive element (4) is dimensioned and arranged such that said electrically conductive material is melted by the thermal energy released in the exothermic reaction of the reactive element (4), and a soldered connection is thus formed with the electrical conductors (1, 2) or with the electrically conductive material applied to the surface regions of the electrical conductors (1, 2).

5. The bypass device according to one of Claims 1, 3 or 4, **characterized in that**
the mechanical energy store (7) of the bypass element (3) is a layered composite of at least two materials with different thermal expansion characteristics, which can assume two stable bending states as the first and second mechanical states.

6. The bypass device according to Claim 5,
**characterized in that**
the layered composite is formed by a bimetallic layer.

7. The bypass device according to Claim 5 or 6,
**characterized in that**
the bypass element (3) is constructed in the form of a dome above the enclosed region.

8. The bypass device according to Claim 7,
**characterized in that**
the second surface region is offset in height below the first surface region.

9. The bypass device according to any one of Claims 2 to 4, **characterized in that**
before triggering the exothermic reaction, the mechanical energy store (8) is prevented from passing from the first to the second mechanical state by a retaining force of the reactive element (4).

10. The bypass device according to Claim 9,
**characterized in that**
the mechanical energy store (8) is an elastic element, in particular a spring element, which is held in a preloaded state as the first mechanical state by the reactive element (4).

11. The bypass device according to Claim 10,
**characterized in that**
a carrier structure is arranged above the bypass element (3) and the elastic element and is firmly connected to the first and/or second electrical conductor (1, 2), wherein the elastic element is clamped between the support structure and the bypass element (3).

12. The bypass device according to any one of Claims 9 to 11, **characterized in that**
the reactive layer (4) is supported on one or more spacers (16) arranged around the enclosed region.

13. The bypass device according to any one of Claims 9 to 12, **characterized in that**
the bypass element (3) has a thermally insulating layer (17) at the transition to the mechanical energy store (8).

14. A battery cell, in which a bypass device according to any one of Claims 1 to 13 has been integrated, or on which a bypass device according to any one of Claims 1 to 13 is arranged.

## Revendications

1. Dispositif de pontage électrique, qui :
- présente au moins un premier (1) et un deuxième conducteur électrique (2), isolés électriquement l'un de l'autre et disposés de telle sorte qu'au moins une première zone de surface du premier conducteur (1), orientée dans une direction spatiale donnée, soit séparée par un interstice d'au moins une deuxième zone de surface du deuxième conducteur (2), orientée dans la même direction spatiale, dans lequel la première zone de surface entoure la deuxième zone de surface,
- un élément de pontage (3) comportant au moins une couche électriquement conductrice (6, 11, 14, 15) est disposé sur les deux zones de surface,
dans lequel l'élément de pontage est configuré de manière à recouvrir la deuxième zone de surface, l'interstice entre les zones de surface et au moins une partie de la première zone de surface, et
dans lequel l'élément de pontage est configuré comme un dispositif de stockage d'énergie mécanique (7) qui, sous l'effet de la libération thermique d'un premier état mécanique, peut être passé d'un premier état mécanique à un deuxième état mécanique stable, dans lequel la couche électriquement conductrice (6, 11, 14, 15) de l'élément de pontage (3) est en contact électrique avec les zones de surface de sorte que les deux conducteurs électriques (1, 2) soient court-circuités,
- dans lequel une couche ou un film constitué d'un ou plusieurs matériaux réagissant de manière exothermique sous l'effet d'un apport d'énergie approprié est disposé comme élément réactif (4) sur les deux zones de surfaces, dans lequel une réaction exothermique peut être déclenchée, au moyen de laquelle l'énergie thermique du dispositif de stockage d'énergie mécanique (7, 8) passe au deuxième état mécanique stable.

2. Dispositif de pontage électrique, qui
- présente au moins un premier (1) et un deuxième conducteur électrique (2) isolés électriquement l'un de l'autre et agencés de telle sorte qu'au moins une première zone de surface du premier conducteur (1) orientée dans une direction spatiale soit séparée par un interstice d'au moins une deuxième zone de surface du deuxième conducteur (2) orientée dans la même direction spatiale, dans lequel la première zone de surface entoure la deuxième zone de surface,
- un élément de pontage (3) comportant au moins une couche électriquement conductrice (6, 11, 14, 15) est disposé sur les deux zones de surfaces,
dans lequel l'élément de pontage est configuré de manière à recouvrir la deuxième zone de surface, l'interstice entre les zone de surfaces et au moins une partie de la première zone de surface,
dans lequel l'élément de pontage est relié à un dispositif de stockage d'énergie mécanique (8) du dispositif de pontage électrique, qui, sous l'effet de la libération thermique d'un premier état mécanique, peut être passé d'un premier état mécanique à un deuxième état mécanique stable, dans lequel la couche électriquement conductrice (6, 11, 14, 15) de l'élément de pontage (3) est en contact électrique avec les zones de surface de sorte que les deux conducteurs électriques (1, 2) soient court-circuités,
- dans lequel une couche ou un film constitué d'un ou plusieurs matériaux réagissant de manière exothermique sous l'effet d'un apport d'énergie approprié est disposé comme élément réactif (4) sur les deux zones de surfaces, dans lequel une réaction exothermique peut être déclenchée, au moyen de laquelle l'énergie thermique du dispositif de stockage d'énergie mécanique (7, 8) passe au deuxième état mécanique stable.

3. Dispositif de pontage selon la revendication 1 ou 2, **caractérisé en ce que** :
la première zone de surface et la deuxième zone de surface sont respectivement recouvertes d'une couche (9, 10) d'un matériau électriquement conducteur, dont le point de fusion est inférieur à celui des conducteurs électriques (1, 2) ;
l'élément réactif (4) est dimensionné et agencé de telle sorte que les deux couches (9, 10) du matériau conducteur fondent sous l'effet de l'énergie thermique libérée lors de la réaction exothermique de l'élément réactif (4), et forment ainsi une liaison brasée avec la couche électriquement conductrice (6, 11, 14, 15) de l'élément de pontage (3).

4. Dispositif de pontage selon une des revendications 1 à 3, **caractérisé en ce que**
l'élément de pontage (3) est recouvert, sur une face tournée vers les zones de surfaces, d'une couche (11) d'un matériau électriquement conducteur, qui présente un point de fusion inférieur à celui des conducteurs électriques (1, 2) ou que la couche électriquement conductrice (6) de l'élément de pontage (3) est constituée d'un tel matériau et que
l'élément réactif (4) est dimensionné et agencé de telle sorte que ce matériau électriquement conducteur fonde sous l'effet de l'énergie thermique dégagée lors de la réaction exothermique de l'élément réactif (4), en formant ainsi une liaison brasée avec les conducteurs électriques (1, 2) ou le matériau électriquement conducteur appliqué sur les zones de surfaces des conducteurs électriques (1, 2).

5. Dispositif de pontage selon une des revendications 1, 3 ou 4, **caractérisé en ce que**
l'élément de pontage (3), servant de dispositif de stockage d'énergie mécanique (7), présente un composite multicouche d'au moins deux matériaux présentant des coefficients de dilatation thermique différents, qui peuvent adopter deux états de flexion stables, constituant le premier et le deuxième état mécanique.

6. Dispositif de pontage selon la revendication 5, **caractérisé en ce que**
le composite multicouche est formé d'une couche bimétallique.

7. Dispositif de pontage selon la revendication 5 ou 6,
**caractérisé en ce que**
l'élément de pontage (3) est configuré en forme de dôme au-dessus de la zone fermée.

8. Dispositif de pontage selon la revendication 7,
**caractérisé en ce que**
la deuxième zone de surface est disposée en retrait au-dessous de la première zone de surface.

9. Dispositif de pontage selon une quelconque des revendications 2 à 4, **caractérisé en ce que**
le dispositif de stockage d'énergie mécanique (8) est empêché de passer du premier au deuxième état mécanique par une force de retenue de l'élément réactif (4) avant le début de la réaction exothermique.

10. Dispositif de pontage selon la revendication 9,
**caractérisé en ce que**
le dispositif de stockage d'énergie mécanique (8) est un élément élastique, notamment un élément de ressort, qui est maintenu dans un état de précontrainte comme premier état mécanique par l'élément réactif (4).

11. Dispositif de pontage selon la revendication 10,
**caractérisé en ce que**
une structure de support est disposée au-dessus de l'élément de pontage (3) et de l'élément élastique et est rigidement reliée au premier et/ou au deuxième conducteur électrique (1, 2), dans lequel l'élément élastique est encastré entre la structure de support et l'élément de pontage (3).

12. Dispositif de pontage selon une quelconque des revendications 9 à 11, **caractérisé en ce que**
la couche réactive (4) repose sur une ou plusieurs entretoises (16) disposées autour de la zone fermée.

13. Dispositif de pontage selon une quelconque des revendications 9 à 12, **caractérisé en ce que**
l'élément de pontage (3) comporte une couche thermiquement isolante (17) à la transition avec le dispositif de stockage d'énergie mécanique (8).

14. Cellule de batterie dans laquelle un dispositif de pontage selon une quelconque des revendications 1 à 13 est intégré ou sur laquelle un dispositif de pontage selon une quelconque des revendications 1 à 13 est disposé.
